# NEUE EUROPÄISCHE PATENTSCHRIFT

(11) **EP 2 743 104 B2**
(45) Veröffentlichungstag und Bekanntmachung des Hinweises auf die Entscheidung über den Einspruch: **20.05.2026**
(45) Hinweis auf die Patenterteilung: 03.01.2018
(21) Anmeldenummer: 13196270.6
(22) Anmeldetag: 09.12.2013
(51) Int. Cl.: B60G 17/052, B60T 17/04, F16K 27/00, B62D 61/12

(54) **Ventil mit einer Befestigungseinrichtung**
Valve with a fixing device
Soupape dotée d'un dispositif de fixation

(30) Priorität: 17.12.2012 DE 102012112362
(43) Veröffentlichungstag der Anmeldung: 18.06.2014
(73) Patentinhaber: Haldex Aktiebolag, 261 24 Landskrona (SE)
(72) Erfinder: Becke, Stefan, 68804 Altlussheim (DE); Tschöke, Tobias, 69121 Heidelberg (DE); Sulzyc, Georg, 68305 Mannheim (DE)
(74) Vertreter: Müller Schupfner & Partner Patent- und Rechtsanwaltspartnerschaft mbB (Muc)

(56) Entgegenhaltungen:
- EP-A1- 0 493 151
- EP-A1- 0 493 152
- EP-A2- 1 035 319
- EP-A2- 1 536 168
- EP-A2- 2 743 104
- DE-A1- 102009 045 732
- DE-A1- 19 544 222
- DE-A1- 19 920 959
- DE-A1- 2 525 490
- DE-B4- 19 920 972
- FR-A1- 2 922 025
- JP-U- H0 573 254
- US-A- 6 053 151

## Beschreibung

### TECHNISCHES GEBIET DER ERFINDUNG

Die Erfindung betrifft ein Ventil für eine Druckluftanlage eines Nutzfahrzeugs. Erfindungsgemäß handelt es sich um ein Liftachsventil, ein Hebe-Senk-Ventil oder ein Luftfederventil (wovon auch ein Luftfeder-Niveauregelventil umfasst sein soll).

### STAND DER TECHNIK

Bei einem Nutzfahrzeug werden Ventile einer Druckluftanlage beispielsweise im Zusammenhang mit einer Luftfederungsanlage des Nutzfahrzeugs eingesetzt. Ein Ventil einer Luftfederungsanlage, welches beispielsweise von der vorliegenden Erfindung betroffen sein kann, ist ein Liftachsventil. Derartige Liftachsventile finden Einsatz, um je nach Bedarf eine Liftachse des Nutzfahrzeugs durch Anheben und Absenken derselben über einen Liftbalg zu aktivieren oder zu deaktivieren, was automatisiert beladungsabhängig erfolgen kann. Ein weiteres von der Erfindung betroffenes Ventil ist beispielsweise ein Hebe-Senk-Ventil, mittels dessen ein manuelles Heben und Senken eines auf Luftfederbälgen abgestützten Fahrzeugaufbaus, beispielsweise an einer Rampe zum Be- und Entladen des Nutzfahrzeugs, erfolgen kann. Üblicherweise verfügen derartige Hebe-Senk-Ventile über eine so genannte Reset-To-Ride-Funktion. Beispielhaft wird hinsichtlich derartiger Druckluftanlagen, Liftachsventile, Hebe-Senk-Ventile und Luftfederventile auf die Druckschriften EP 0 830 958 A1, DE 10 2004 050 194 B3, DE 41 20 824 C1, DE 10 2010 003 463 A1, DE 42 02 729 C2 und DE 101 29 143 C1 verwiesen.

Die Ventile für eine Druckluftanlage eines Nutzfahrzeugs müssen starr und dauerhaft an dem Nutzfahrzeug befestigt werden. DE 10 2009 045 732 A1 offenbart ein Ventil für eine Druckluftanlage eines Nutzfahrzeugs mit den Merkmalen des Oberbegriffs des unabhängigen Patentanspruchs 1. Bei dem Ventil kann es sich um ein Liftachsventil oder ein Hebe-Senk-Ventil handeln. Das Ventil besitzt ein Gehäuse aus Kunststoff. Zur Befestigung des Gehäuses des Ventils an dem Nutzfahrzeug sind zwei verschraubbare Befestigungsmittel vorgesehen, über die das Ventil an zwei beabstandeten Orten an einem Tragelement wie einer Konsole befestigt werden kann. Zu diesem Zweck weist das Gehäuse zwei Ansätze oder Vorsprünge mit darin gebildeten durchgängigen Ausnehmungen auf. In diese Ausnehmungen sind metallische Hülsen eingegossen oder gefügt. Zur Befestigung des Gehäuses werden Schrauben durch die Hülsen gesteckt, die dann mit dem Tragelement verschraubt werden können.

JP H05 73254 U offenbart ein Kraftstoffsystem mit einem Tank, einem Separator, einem Drucksensor, einem Kanister mit Einlass und Auslass sowie einem Frischluftanschluss, einem Frischluftventil, einem Magnetventil und einem Ansaugkrümmer eines Einlasstrakts der Brennkraftmaschine. Die genannten Komponenten des Kraftstoffsystems sind über Leitungen miteinander fluidisch verbunden. Beispielsweise erfolgt die Verbindung zwischen dem Kanister und dem Frischluftventil über einen Schlauch. Zusätzlich sind Komponenten des Kraftstoffsystems über mechanische Verbindungen miteinander gekoppelt: Der Kanister ist mit dem Frischluftventil über eine Schraube verbunden. Darüber hinaus erfolgt eine Verriegelung mit einem Haken, einem Vorsprung und einem Verriegelungsteil dargestellt, über die eine Befestigung eines Ventils an einem mit dem Kanister verbundenen Flansch mit Schlauchteil erfolgt. Die Druckschrift beschäftigt sich grundsätzlich nicht mit der Befestigung eines derart gebildeten Kraftstoffsystems an dem Fahrzeug. Lediglich in einer Figur der Druckschrift ist offenbart, dass das Frischluftventil über eine Schraubverbindung an einem Tragblech an der Seite des Fahrzeugkörpers des Kraftfahrzeugs befestigt ist. Für diese Befestigung wird ein sich von dem Frischluftventil erstreckender Flansch genutzt.

DE 199 20 959 A1 betrifft die Befestigung eines Magnetventils an einem Ansaugkrümmer eines Einlasstrakts einer Brennkraftmaschine. Die Druckschrift schlägt vor, das Magnetventil nicht unmittelbar mit dem Ansaugkrümmer zur verbinden. Vielmehr wird das Magnetventil mittels einer Schraube mit einer Aufnahme, welche hier als Befestigungsvorrichtung bezeichnet ist, verschraubt, so dass die Aufnahme und das Magnetventil eine Einheit bilden. Diese Einheit wird dann in eine Ausnehmung des Ansaugkrümmers eingeklipst, wobei federnde Rastnasen der Aufnahme in Rastvertiefungen des Ansaugkrümmers einrasten.

DE 199 20 972 B4 offenbart eine integrale Baueinheit eines Kraftstoffsystems, bei welcher in ein Gehäuse ein Luftfilter, ein Rückschlagventil, Kanäle mit Anschlüssen und ein Magnetventil integriert sind. Das Gehäuse verfügt hierbei über einen Deckel, welcher über zwei Schraubverbindungen an dem Grundkörper des Gehäuses befestigt ist. Die Druckschrift enthält keinen Hinweis darauf, wie eine derart gebildete Baueinheit an einem Fahrzeug befestigt werden kann.

### AUFGABE DER ERFINDUNG

Der Erfindung liegt die Aufgabe zugrunde, ein Ventil, nämlich ein Liftachsventil, ein Hebe-Senk-Ventil oder ein Luftfederventil, für ein Nutzfahrzeug vorzuschlagen, welches hinsichzlich der Herstellung und/oder der Montage bzw. Demontage vereinfacht ist.

### LÖSUNG

Die Aufgabe der Erfindung wird erfindungsgemäß mit den Merkmalen des unabhängigen Patentanspruchs gelöst. Weitere Ausgestaltungen eines erfindungsgemäßen Ventils ergeben sich aus den abhängigen Patentansprüchen.

### BESCHREIBUNG DER ERFINDUNG

Der Erfindung liegt die Beobachtung zugrunde, dass die Befestigung eines Ventils an einer Konsole üblicherweise Befestigungsmittel in Form von zwei Verschraubungen erfordert, wobei zur Bildung einer räumlichen Dreipunktabstützung sogar oftmals drei Verschraubungen eingesetzt werden. Erfindungsgemäß ist erkannt worden, dass die Befestigung vereinfacht werden kann, wenn die Zahl der zu verschraubenden Befestigungsmittel auf ein einziges zu verschraubendes Befestigungsmittel reduziert wird. Damit ist zur Montage lediglich eine Verschraubung herzustellen - für die Demontage gilt das Entsprechende.

Grundsätzlich ist allerdings mit einer einzigen Verschraubung eine sichere Befestigung des Ventils an der Konsole nicht gewährleistet. Um lediglich ein Beispiel zu nennen kann mit lediglich einer einzigen Verschraubung (ohne zusätzliche Befestigungsmittel und bei nur geringen Schraubkräften) noch eine Verdrehung des Ventils um die Schraubachse erfolgen, womit dann schlimmstenfalls infolge der wirkenden Reibkräfte auch die Verschraubung wieder gelöst wird. Erfindungsgemäß wird eine sichere Befestigung trotz des Einsatzes nur einer Verschraubung dennoch gewährleistet, indem die Befestigungsvorrichtung zusätzlich zu dem verschraubbaren Befestigungsmittel über ein formschlüssiges Befestigungsmittel verfügt. Eine Montage des Ventils über sein Gehäuse erfolgt dann, indem lediglich das eine verschraubbare Befestigungsmittel verschraubt wird, während zusätzlich die Abstützung oder Sicherung durch Formschluss mittels des formschlüssigen Befestigungsmittels erfolgt. Durch das Zusammenwirken des einen verschraubbaren Befestigungsmittels und des formschlüssigen Befestigungsmittels wird dann erreicht, dass die zuvor genannte Rotation um die Schraubachse des verschraubbaren Befestigungsmittels unterbunden ist. Vorzugsweise werden jedwede auf das Ventile wirkenden Querkräfte und Momente von den Befestigungsmitteln aufgenommen, womit das Ventil mit lediglich einer einzigen Verschraubung stabil und sicher an der Konsole befestigt ist.

Die Konsole, an welcher das Ventil befestigt werden soll, kann grundsätzlich beliebig ausgestaltet und an einer beliebigen Stelle an dem Nutzfahrzeug angeordnet sein. Beispielsweise kann die Konsole mittig zwischen Achsen des Nutzfahrzeuges angeordnet ist. Die Konsole kann ein einfaches ebenes oder gekrümmtes Halteblech sein, das z. B. mittels Stanzen gefertigt ist. Vorzugsweise ist die Konsole unmittelbar oder mittelbar an einem Fahrzeugrahmen des Nutzfahrzeug befestigt. Die Konsole ist dabei hinsichtlich einer Konturgebung und/oder hinsichtlich Ausnehmungen, Vorsprüngen und Vertiefungen so korrespondierend zu dem Ventil und der Befestigungsvorrichtung ausgebildet, dass das verschraubbare Befestigungsmittel mit der Konsole verschraubbar ist und das formschlüssige Befestigungsmittel das Gehäuse formschlüssig an der Konsole abstützt. Dazu kann die Konsole z. B. mit entsprechenden Bohrungen, Ausnehmungen, Vorsprüngen und/oder Gewinden versehen sein.

Die erfindungsgemäße Befestigungsvorrichtung weist mindestens zwei Befestigungsmittel auf, die zur Befestigung des Gehäuses an der Konsole dienen. Indem die mindestens zwei Befestigungsmittel voneinander beabstandet angeordnet sind, werden durch die Befestigungsmittel zwei Abstützungsorte festgelegt, womit das Gehäuse bereits sowohl gegenüber auf das Gehäuse wirkenden Querkräften als auch Momenten sicher an der Konsole fixiert sein kann.

Die Befestigungsvorrichtung kann jedoch auch mehr als zwei Befestigungsmittel zur Befestigung des Gehäuses an der Konsole aufweisen. In einer bevorzugten Ausführungsform des erfindungsgemäßen Ventils weist die Befestigungsvorrichtung drei Befestigungsmittel auf, die voneinander beabstandet angeordnet sind. Diese bilden eine Art Dreipunktabstützung, wobei über die drei Abstützungsorte die Lage des Gehäuses des Ventils relativ zu der Konsole festgelegt und gesichert ist.

Die Befestigungsmittel können auf beliebige Weise mit dem Gehäuse des Ventils verbunden sein. Beispielsweise können die Befestigungsmittel stoffschlüssig mit dem Gehäuse verbunden sein, insbesondere durch Schweißen oder Kleben. Für eine besonders hohe Stabilität der Verbindung von einem der Befestigungsmittel mit dem Gehäuse und/oder eine einfache Herstellung ist in einer bevorzugten Ausführungsform des erfindungsgemäßen Ventils mindestens eines der Befestigungsmittel einstückig mit dem Gehäuse des Ventils ausgebildet. In einer besonders bevorzugten Ausführungsform sind alle Befestigungsmittel oder zumindest Teile aller Befestigungsmittel einstückig mit dem Gehäuse des Ventils gebildet.

Es ist insbesondere vorteilhaft, wenn das formschlüssige Befestigungsmittel einstückig mit dem Gehäuse des Ventils gebildet ist. Auf diese Weise kann eine besonders stabile Verbindung zwischen dem formschlüssigen Befestigungsmittel und dem Gehäuse erreicht werden. Das formschlüssige Befestigungsmittel kann dazu als Vorsprung des Gehäuses ausgebildet sein, über den sich das Gehäuse durch Formschluss an der Konsole abstützen kann. Das formschlüssige Befestigungsmittel kann jedoch auch als Aussparung in dem Gehäuse des Ventils gebildet sein, wobei in die Aussparung ein entsprechender Vorsprung der Konsole eingreifen kann, womit eine formschlüssige Befestigung erfolgt. (Hierbei kann das formschlüssige Eingreifen spielfrei oder mit einem Spiel erfolgen, wobei im letztgenannten Fall das formschlüssige Befestigungsmittel erst nach Überwindung des Spiels zur Wirkung kommt. Möglich ist auch, dass über das formschlüssige Befestigungsmittel unmittelbar einer erste Befestigungswirkung herbeigeführt wird, während eine zweite zusätzliche Befestigungswirkung, beispielsweise in eine andere Richtung, erst nach Überwindung eines Spiels herbeigeführt wird.)

In einer anderen Ausführungsform des erfindungsgemäßen Ventils ist das formschlüssige Befestigungsmittel separat von dem Gehäuse gebildet. Dies kann beispielsweise dann vorteilhaft sein, wenn das formschlüssige Befestigungsmittel aus einem anderen Material als das Gehäuse hergestellt werden soll. Außerdem kann die von dem Gehäuse separate Ausbildung des formschlüssigen Befestigungsmittels vorteilhaft bezüglich der Fertigung des Gehäuses des Ventils sein. Die Verbindung des separat von dem Gehäuse gebildeten formschlüssigen Befestigungsmittels mit dem Gehäuse des Ventils kann auf beliebige Weise erfolgen. Beispielsweise wird das formschlüssige Befestigungsmittel in einer Ausnehmung des Gehäuses des Ventils gehalten. Dazu kann das formschlüssige Befestigungsmittel in die Ausnehmung des Gehäuses gepresst oder geklebt sein, um eine sichere Verbindung mit dem Gehäuse herzustellen. Das formschlüssige Befestigungsmittel kann jedoch auch über eine Außenfläche des Gehäuses mit diesem verbunden sein. Beispielsweise kann das formschlüssige Befestigungsmittel stoffschlüssig mit dem Gehäuse verbunden sein, beispielsweise durch Kleben oder Schweißen, oder mit diesem verspannt sein.

Für eine besonders einfache Fertigung des formschlüssigen Befestigungsmittels kann dieses mit einem Haltestift ausgebildet sein. Wenn der Haltestift separat von dem Gehäuse gebildet ist, kann dieser im Bedarfsfall in eine Ausnehmung des Gehäuses eingesetzt sein und dann an dem Gehäuse fixiert sein. Der Haltestift kann jedoch auch einstückig mit dem Gehäuse des Ventils gebildet sein, indem das Gehäuse einen entsprechenden stiftartigen Vorsprung aufweist. Zur Herstellung des Formschlusses zwischen dem Haltestift und der Konsole kann der Haltestift in eine dem Haltestift entsprechend geformte Aufnahme der Konsole, insbesondere eine korrespondierende Bohrung, eine Ausfräsung oder ein Langloch, eingreifen.

Das verschraubbare Befestigungsmittel kann grundsätzlich beliebig ausgebildet sein. In einer vorteilhaften Ausführungsform ist das verschraubbare Befestigungsmittel mit einem Innengewinde des Gehäuses gebildet, in welches zum Verschrauben des Ventils mit der Konsole dann eine Schraube geschraubt werden kann.

Das verschraubbare Befestigungsmittel kann aber auch einen Stehbolzen aufweisen, der in einem Innengewinde des Gehäuses festgeschraubt ist. Dieser Stehbolzen kann entweder vor einer Montage des Ventils an der Konsole oder während der Montage in das Innengewinde geschraubt werden. Der Stehbolzen kann hierbei grundsätzlich beliebig ausgebildet sein. Beispielsweise kann der Stehbolzen aus Kunststoff oder einem Metall o. ä. hergestellt sein. In einer bevorzugten Ausführungsform ist der Stehbolzen von seinen beiden Enden her mit gegenläufigen Gewinden ausgebildet. So kann der Stehbolzen zum einen fest in das Gewinde des verschraubbaren Befestigungsmittels geschraubt werden. Zum anderen kann aber auch ein sicheres Verschrauben über das verschraubbare Befestigungsmittel erfolgen, indem der Stehbolzen mit seinem anderen Ende durch eine Ausnehmung der Konsole geführt und beispielsweise über eine Schraubenmutter mit der Konsole verschraubt wird.

Für eine besonders einfache Fertigung kann das verschraubbare Befestigungsmittel mit einer (durchgängigen oder nicht durchgängigen) Ausnehmung des Gehäuses gebildet sein, die ein Innengewinde aufweist. In die Ausnehmung mit dem Gewinde kann zum Verschrauben des Gehäuses eine Schraube geschraubt werden. Es kann aber auch ein Stehbolzen in die Ausnehmung des Gehäuses geschraubt werden, mit dem das Gehäuse mit der Konsole verschraubt wird.

Für eine bevorzugte Ausgestaltung der Erfindung ist eine Hülse in dem Gehäuse angeordnet, wobei mit der Hülse das verschraubbare Befestigungsmittel gebildet ist. Indem die Hülse ein Gewinde aufweist, kann das Gehäuse beispielsweise über eine Schraube oder über einen Stehbolzen mit der Konsole verschraubt werden. Die Verbindung der Hülse mit dem Gehäuse kann dabei erfolgen, indem die Hülse in dem Gehäuse, beispielsweise im Bereich eines Vorsprungs, eingegossen oder in eine Ausnehmung des Gehäuses eingesetzt ist. Die Hülse kann aber auch stoffschlüssig mit dem Gehäuse verbunden sein, insbesondere durch Kleben oder Schweißen. Insbesondere kann durch den Einsatz einer Hülse das Gehäuse mit einer geringen Wandstärke gebildet sein, sodass dadurch eine besonders materialsparende Ausbildung des Gehäuses erreicht werden kann.

Das verschraubbare Befestigungsmittel kann in einer weiteren Ausführungsform als durchgängige Ausnehmung gebildet sein, durch die sich ein Befestigungsbolzen erstrecken kann. Zum Verschrauben können auf den Befestigungsbolzen an seinen beiden Enden Muttern aufgeschraubt werden. Der Befestigungsbolzen kann jedoch auch auf einer Seite einen Kopf aufweisen, über den eine Verschiebung des Befestigungsbolzens relativ zu der durchgängigen Ausnehmung des verschraubbaren Befestigungsmittels zu einer Seite hin begrenzt ist. Der Befestigungsbolzen kann aber auch in der durchgehenden Ausnehmung des Gehäuses, z. B. durch Kleben oder Verpressen oder Klemmen, fixiert sein.

In einer vorteilhaften Ausführungsform weist die Befestigungsvorrichtung (zusätzlich zu dem verschraubbaren Befestigungsmittel und dem formschlüssigen Befestigungsmittel) mindestens ein weiteres Befestigungsmittel auf. Dieses kann ein weiteres formschlüssiges Befestigungsmittel sein. Das weitere Befestigungsmittel kann jedoch auch mit einer Anlagefläche zur Anlage an der Konsole gebildet sein. Indem das Gehäuse über die Anlagefläche des weiteren Befestigungsmittels an der Konsole anliegt, erfolgt eine Abstützung des Gehäuses des Ventils an der Konsole über einen dritten Ort, sodass eine Dreipunktabstützung und somit eine besonders sichere Abstützung des Ventils an der Konsole erreicht werden kann. Die Anlagefläche kann hierbei beliebig gestaltet sein. Beispielsweise kann die Anlage im Wesentlichen punktuell erfolgen. Für eine breitere Abstützung kann die Anlagefläche eine vorgegebene Fläche aufweisen, beispielsweise eine Kreisringfläche. Für eine Verbesserung der Haftungs- oder Reibungseigenschaften der Anlagefläche gegenüber der Konsole kann die Anlagefläche beispielsweise strukturiert oder beschichtet sein. Möglich ist, dass (insbesondere zwecks Vermeidung einer Mehrfachpassung, zur Anpassung an Fertigungstoleranzen und/oder für unterschiedliche Einbaubedingungen) die Anlagefläche elastisch abgestützt ist oder die Position der Anlagefläche einstellbar ist.

In einer besonders einfachen Ausführungsform des erfindungsgemäßen Ventils ist die Anlagefläche von dem Gehäuse selbst gebildet. Dazu kann eine Außenfläche des Gehäuses entsprechend der Konsole geformt sein, sodass das Gehäuse über die derart gebildete Anlagefläche an der Konsole anliegen und somit abgestützt werden kann.

Um eine erhöhte Flexibilität zur Befestigung des Ventils an der Konsole zu erreichen, kann das Ventil mehrere Befestigungsvorrichtungen (jeweils mit den genannten Befestigungsmitteln) aufweisen, über die beispielsweise wahlweise das Ventil in unterschiedlichen Orientierungen mit der Konsole verbindbar ist oder auch eine Verbindung mit unterschiedlichen Konsolen mit unterschiedlichen Anschlussmaßen erfolgen kann.

In einer bevorzugten Ausführungsform sind die alternativen Befestigungsvorrichtungen in Umfangsrichtung des Gehäuses zueinander versetzt angeordnet. Beispielsweise können zwei alternative, aber u. U. für sich genommen identisch ausgebildete Befestigungsvorrichtungen auf zwei gegenüberlegenden Seiten des Gehäuses angeordnet sein. So kann ein- und dasselbe Ventil an derselben oder unterschiedlichen Konsolen in unterschiedlichen Orientierungen oder "auf der rechten und linken Fahrzeugseite" befestigt werden, ohne dass dazu zusätzliche Aufnahmen in der Konsole vorgesehen werden müssen oder Ventile mit unterschiedlichen Befestigungsvorrichtungen bereitgestellt werden müssen.

Das formschlüssige Befestigungsmittel und das verschraubbare Befestigungsmittel sowie auch etwaige weitere Befestigungsmittel können grundsätzlich zueinander beliebig angeordnet und orientiert sein. Für eine besonders einfache Montage des Ventils an der Konsole ist das formschlüssige Befestigungsmittel parallel zu der Schraubachse des verschraubbaren Befestigungsmittels orientiert, sodass die Befestigung jeweils über eine Seite erfolgen kann. Dazu können die Befestigungsmittel in entsprechende Aufnahmen wie z. B. Bohrungen der Konsole gesteckt werden. Dadurch allein kann aber noch keine dauerhafte Fixierung des Ventils an der Konsole erfolgen, da der herbeigeführte Formschluss wieder gelöst werden kann. Indem dann aber das verschraubbare Befestigungsmittel mit der Konsole verschraubt wird, wird das Gehäuse zum einen über das verschraubbare Befestigungsmittel an der Konsole befestigt. Zum anderen wird über das Verschrauben gleichzeitig auch das formschlüssige Befestigungsmittel an der Konsole dauerhaft gesichert, wobei das verschraubte Befestigungsmittel die Auflösung des Formschlusses verhindert. Insbesondere erfolgt das Verschrauben so weit, bis Anlageflächen der jeweiligen Befestigungsmittel zur Anlage an der Konsole kommt. In diesem Fall bestimmt eine einzige Verschraubung durch das verschraubbare Befestigungsmittel die Anpresskräfte mehrerer oder sämtlicher Befestigungsmittel an die Konsole im Bereich der Anlageflächen. Die Schraubachse des verschraubbaren Befestigungsmittels kann hierbei beispielsweise festgelegt sein durch eine Achse eines Stehbolzens des verschraubbaren Befestigungsmittels, eine Achse seines (Innen-) Gewindes, welches in einer Ausnehmung des Gehäuses oder in einer Hülse gebildet ist, oder durch eine Achse einer durchgängigen Ausnehmung des verschraubbaren Befestigungsmittels, durch die sich ein Stehbolzen erstreckt. Indem das formschlüssige Befestigungsmittel parallel zu der Schraubachse orientiert ist, kann eine besonders gute Aufnahme von auf das Ventil einwirkenden Momenten erreicht werden.

Die Befestigungsvorrichtung kann grundsätzlich aus beliebigen Materialien hergestellt sein. Um lediglich ein nicht beschränkendes Beispiel zu nennen kann die Befestigungsvorrichtung aus einem Metall oder Aluminium hergestellt sein. Für eine besonders leichte und u. U. kostengünstige Bauweise ist die Befestigungsvorrichtung jedoch zumindest teilweise aus einem Kunststoff, beispielsweise in einem Spritzgussverfahren, hergestellt. Beispielsweise kann die Befestigungsvorrichtung hierzu einstückig mit einem Gehäuse des Ventils aus Kunststoff gebildet sein, wobei lediglich ggf. Schrauben, Stehbolzen, Gewindehülsen u. ä. der Befestigungsvorrichtung(en) separat von dem Gehäuse und aus einem anderen Material, beispielsweise aus Metall, hergestellt sind.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht. Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert eine Ausführungsform des erfindungsgemäßen Ventils, das über eine Befestigungsvorrichtung an einer Konsole befestigt ist, in einer geschnittenen Ansicht I-I (zur Schnittführung vgl. Fig. 3).
- **Fig. 2**: zeigt stark schematisiert eine weitere Ausführungsform des erfindungsgemäßen Ventils in einer geschnittenen Ansicht II-II (zur Schnittführung vgl. Fig. 3).
- **Fig. 3**: zeigt stark schematisiert ein an einer Konsole befestigtes erfindungsgemäßes Ventil gemäß Fig. 1 oder Fig. 2 in einer Vorder- oder Seitenansicht.
- **Fig. 4**: zeigt eine Ansicht eines erfindungsgemäßen Ventils in Ausbildung als Liftachs-ventil schräg von der Seite.
- **Fig. 5**: zeigt das Ventil gemäß Fig. 4 in einer Seitenansicht.

### FIGURENBESCHREIBUNG

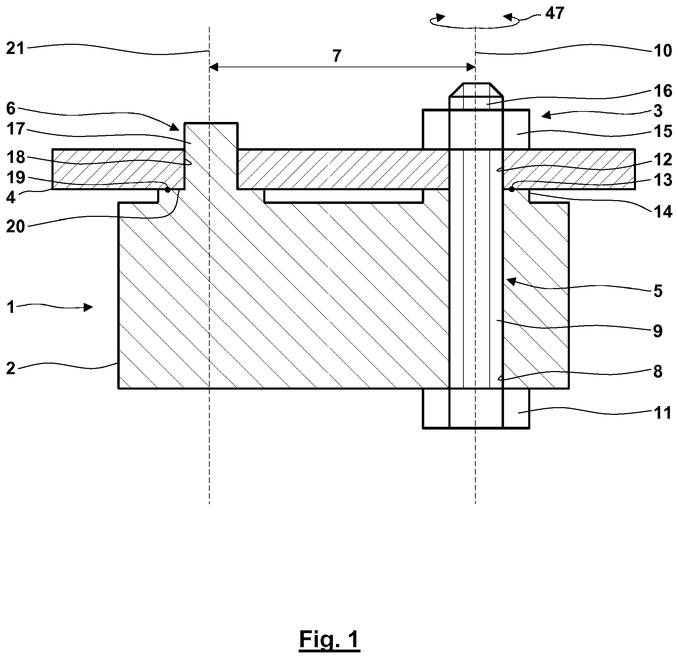

**Fig. 1** zeigt eine Ausführungsform eines erfindungsgemäßen Ventils 1, dessen Gehäuse 2 über eine Befestigungsvorrichtung 3 des Ventils 1 mit einem als Konsole 4 ausgebildeten Tragelement verschraubt ist. Hierbei ist das Ventil 1 grob schematisiert und stark vereinfacht als quaderförmiger Vollkörper dargestellt, ohne dass die einzelnen, für die Funktion des Ventils 1 an sich erforderlichen Ventilelemente dargestellt sind. Die Befestigungsvorrichtung 3 weist zwei Befestigungsmittel 5, 6 auf, die in einem Abstand 7 voneinander angeordnet sind. Das Befestigungsmittel 5 ist hierbei als verschraubbares Befestigungsmittel 5 ausgebildet, während das Befestigungsmittel 6 als formschlüssiges Befestigungsmittel 6 ausgebildet ist.

Das verschraubbare Befestigungsmittel 5 ist mit einer durchgängigen Ausnehmung 8 oder Bohrung des Gehäuses 2 des Ventils 1 gebildet, wobei sich durch die Ausnehmung 8 ein Befestigungsbolzen 9 erstreckt. Durch einen Kopf 11 auf der der Konsole 4 gegenüberliegenden Seite des Ventils 1 ist eine Verschiebung des Befestigungsbolzens 9 entlang der Schraubachse 10 einseitig begrenzt. Zur Befestigung des Ventils 1 an der Konsole 4 über das verschraubbare Befestigungsmittel 5 wird der Befestigungsbolzen 9 durch eine Ausnehmung 12 der Konsole 4 gesteckt und eine Anlagefläche 13 des verschraubbaren Befestigungsmittels 5, die hier durch einen Vorsprung 14 des Gehäuses 2 gebildet ist, zur Anlage an die Konsole 4 gebracht. Indem eine Mutter 15 auf einen aus der Ausnehmung 12 auskragenden Endbereich 16 des Befestigungsbolzens 9 geschraubt wird, wird das Ventil 1 mittels des verschraubbaren Befestigungsmittels 5 gegenüber der Konsole 4 fixiert. In seinem verschraubten Zustand kann das verschraubbare Befestigungsmittel 5 auf das Gehäuse 2 wirkende Querkräfte und Momente aufnehmen. Insbesondere wird durch das Verschrauben erreicht, dass parallel zu Schraubachse 10 wirkende Kräfte durch Zugkräfte des als Schraube ausgebildeten Befestigungsmittels oder durch die Anlagefläche 13 von dem verschraubbaren Befestigungsmittel 5 und der Mutter 15 aufgenommen werden können. Es können auch quer zu der Schraubachse 10 wirkende Kräfte von dem verschraubbaren Befestigungsmittel 5 aufgenommen werden, da es sich mit seiner Anlagefläche 13 quer zu der Schraubachse 10 an der Konsole 4 abstützt und somit zwischen der Anlagefläche 13 und der Konsole 4 eine Haftreibung bewirkt wird. Über die sich an der Konsole 4 abstützende Anlagefläche 13 können auch Kippmomente aufgenommen werden, wobei der Hebelarm für diese Abstützung der Erstreckung der Anlagefläche 13 quer zur Schraubachse 10 entspricht. In begrenztem Ausmaß können infolge der Reibung in der Anlagefläche 13 und mit dem Hebelarm der Anlagefläche 13 schließlich auch Momente um die Schraubachse 10 aufgenommen werden.

Das formschlüssige Befestigungsmittel 6 ist mit einer Längs- oder Stiftachse 21 parallel zu der Schraubachse 10 des verschraubbaren Befestigungsmittels 5 orientiert. In der in Fig. 1 dargestellten Ausführung des Ventils 1 ist das formschlüssige Befestigungsmittel 6 ein Haltestift 17, der einstückig von dem Gehäuse 2 des Ventils 1 ausgebildet ist. Zur Montage wird das formschlüssige Befestigungsmittel 6 durch eine Ausnehmung 18 oder Bohrung der Konsole 4 gesteckt. Nach erfolgter Montage stützt sich das Gehäuse 2 des Ventils 1 dann, wie in Fig. 1 dargestellt, über das formschlüssige Befestigungsmittel 6 an der Konsole 4 ab, womit ein Formschluss zwischen der Konsole 4 und dem formschlüssigen Befestigungsmittel 6 gegenüber einer Rotation 47 um die Schraubachse 10 gebildet ist. In der hier dargestellten Ausführung weist das formschlüssige Befestigungsmittel 6 eine Anlagefläche 19 auf, die mit einem Vorsprung 20 des Gehäuses 2, von welchem der Haltestift 17 auskragt, gebildet ist. Über die Anlagefläche 19 des formschlüssigen Befestigungsmittels 6 allein können quer zu der Anlagefläche 19 nur in Richtung der Konsole 4 wirkende Normalkräfte aufgenommen werden, deren Betrag durch die Vorspannung des Befestigungsbolzens 9 vorgegeben ist. In umgekehrter Richtung erfolgt jedoch keine Aufnahme. Zusätzlich können durch die an der Konsole 4 anliegende Anlagefläche 19 Reibkräfte bewirkt werden, die Kräften parallel zu der Anlagefläche 19 bzw. quer zu der Stiftachse 21 entgegenwirken können. Dadurch und durch ein Abstützen des Haltestifts 17 in der Ausnehmung 18 können schließlich u. U. auch Kippmomente sowie Momente aufgrund einer Drehung um eine Stiftachse 21 des Haltestifts 17 aufgenommen werden. Da jedoch das formschlüssige Befestigungsmittel 6 allein, d. h. ohne Verschrauben des verschraubbaren Befestigungsmittels 5, noch nicht an der Konsole 4 fixiert sein muss, können solche Querkräfte und Momente von dem formschlüssigen Befestigungsmittel 6 allein grundsätzlich nur in geringerem Umfang aufgenommen werden.

Eine sichere Befestigung des Gehäuses 2 an der Konsole 4 wird erst durch das Zusammenwirken des verschraubbaren Befestigungsmittels 5 und des formschlüssigen Befestigungsmittels 6 erreicht. Wie bereits oben erläutert können Momente, die zu einer Drehung des Ventils 1 um die Schraubachse 10 des verschraubbaren Befestigungsmittels 5 führen würden, durch das verschraubbare Befestigungsmittel 5 allenfalls begrenzt durch Reibung zwischen Konsole 4 und Anlagefläche 13 mit einem kleinen Hebelarm aufgenommen werden. Indem zusätzlich das formschlüssige Befestigungsmittel 6 vorgesehen ist, dessen Stiftachse 21 nicht koaxial, sondern mit dem Abstand 7 versetzt zu der Schraubachse 10 verläuft, wird das Gehäuse 2 auch gegenüber der Rotation 47 um die Schraubachse 10 des verschraubbaren Befestigungsmittels 5 drehfest abgestützt. Damit wird erreicht, dass über die Befestigungsvorrichtung 3 Normalkräfte, Querkräfte und Momente aufgenommen werden und das Gehäuse 2 des Ventils 1 sicher an der Konsole 4 befestigt ist. Ein zusätzliches Verschrauben des formschlüssigen Befestigungsmittels 6 ist hierbei nicht erforderlich, da ein unerwünschtes, die Befestigung schwächendes oder auflösendes Austreten des Haltestifts 17 aus der Ausnehmung 18 der Konsole 4 bereits durch das Verschrauben des verschraubbaren Befestigungsmittels 5 verhindert wird. Durch die versetzten Anlageflächen 13, 19 der Befestigungsmittel 5, 6 wird ein besonders stabiles Abstützen des Gehäuses 2 an der Konsole 4 gewährleistet.

Die Anlageflächen 13, 19 können mit einer Beschichtung ausgebildet sein, die beispielsweise elastisch ist, sodass mit dem Verschrauben des verschraubbaren Befestigungsmittels 5 das Gehäuse 2 gegen die Konsole 4 elastisch verspannt wird. Es kann aber auch vorgesehen sein, dass das Gehäuse 2 mit dem Verschrauben des verschraubbaren Befestigungsmittels 5 "hart" gegen die Konsole 4 verschraubt wird. Für die Gestaltung der beteiligten Steifigkeiten gibt es je nach den Anforderungen vielfältige Möglichkeiten.

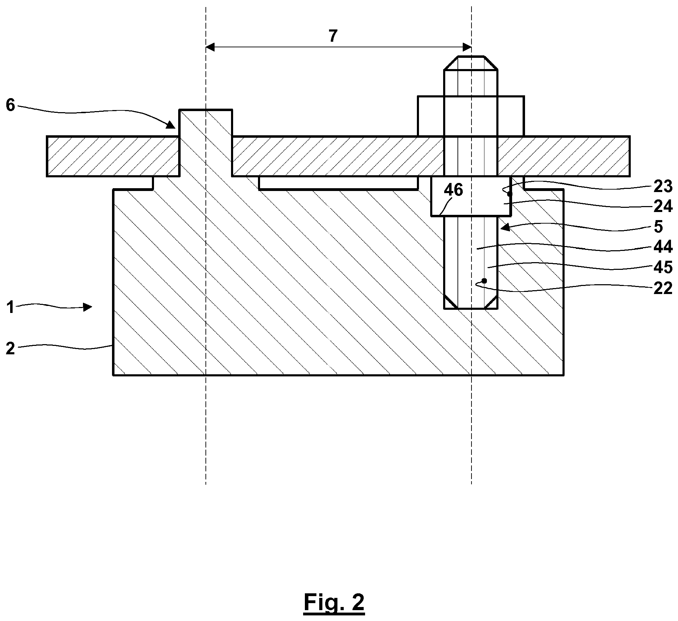

**Fig. 2** zeigt eine weitere Ausführungsform des erfindungsgemäßen Ventils 1, bei dem bei ansonsten Figur 1 entsprechender Ausgestaltung das verschraubbare Befestigungsmittel 5 mit einem Stehbolzen 44 gebildet ist, der in ein Innengewinde 45 der Ausnehmung 22 des Gehäuses 2 geschraubt ist. In der in Fig. 2 dargestellten Ausführungsform weist die Ausnehmung 22 eine Erweiterung 23 mit erweitertem freien zylindrischen Querschnitt auf, in die ein korrespondierender Bund 24 des Stehbolzens 44 eintreten kann, mit dem dann der Stehbolzen 44 in dem Innengewinde 45 gegen einen Absatz 46 der Ausnehmung 22 festgezogen werden kann. Auf diese Weise ist der Stehbolzen 44 in dem Gehäuse 2 des Ventils 1 fixiert.

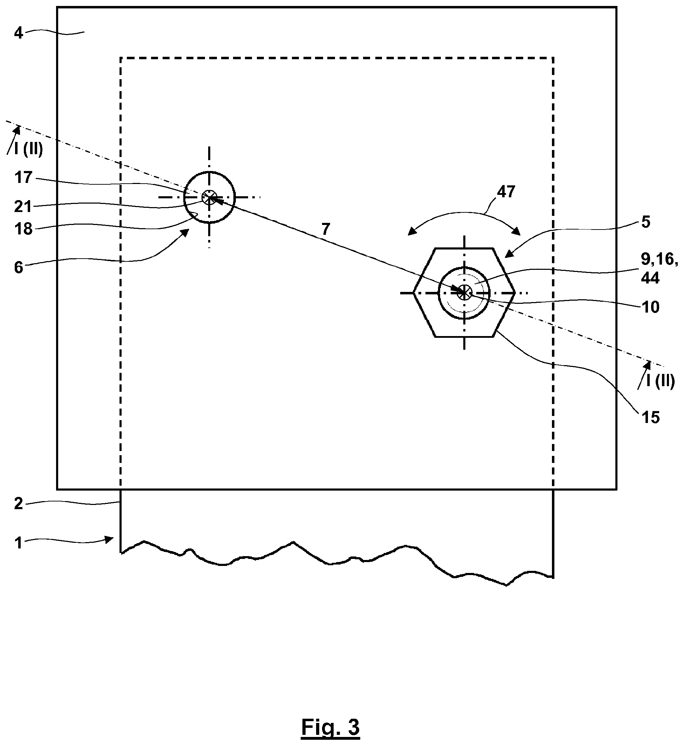

In **Fig. 3** ist ein Ventil 1 gemäß Fig. 1 oder Fig. 2 in einer Vorder- oder Seitenansicht auf die montierte Einheit aus Konsole 4 und Ventil 1 dargestellt, wobei die Konsole 4 das Ventil 1 teilweise abdeckt. In einer geschnittenen Ansicht entlang I-I oder II-II kann das an der Konsole 4 befestigte Ventil 1 gemäß Fig. 3 wie in Fig. 1 oder Fig. 2 dargestellt ausgebildet sein.

In Fig. 3 ist zu erkennen, dass das verschraubbare Befestigungsmittel 5 und das formschlüssige Befestigungsmittel 6 in dem Abstand 7 voneinander angeordnet sind. Die Schraubachse 10 des verschraubbaren Befestigungsmittels 5 verläuft in der hier dargestellten Ausführung senkrecht zu der Zeichenebene. Durch das formschlüssige Befestigungsmittel 6, hier den Haltestift 17, dessen Stiftachse 21 ebenfalls senkrecht zu der Zeichenebene orientiert ist, wird das Gehäuse 2 drehfest gegenüber einer Rotation 47 um die Schraubachse 10 des verschraubbaren Befestigungsmittels 5 abgestützt.

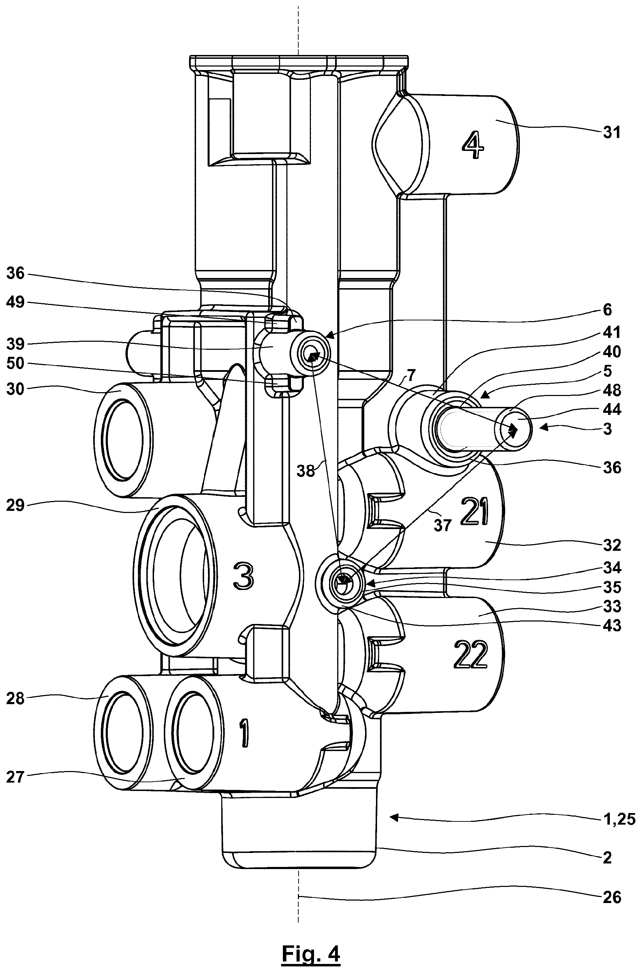

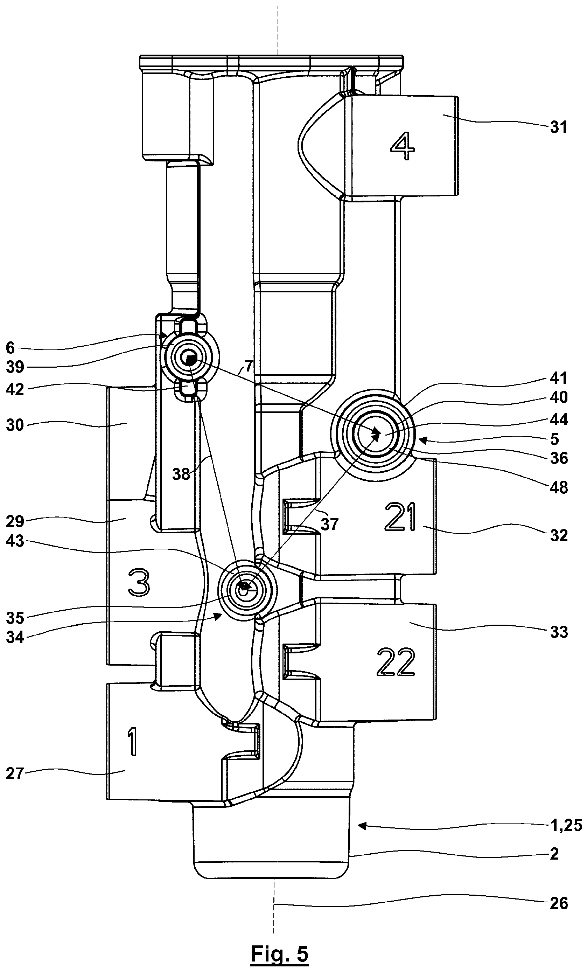

**Fig. 4** und **Fig. 5** zeigen ein erfindungsgemäßes Ventil 1 in Ausbildung als Liftachsventil 25. In das Gehäuse 2 des Liftachsventils 25 sind mehrere Ausnehmungen eingebracht, in die Anschlüsse 27 bis 33 zum Anschließen des Ventils 1 an eine Druckluftanlage eingesetzt, eingepresst oder eingeschraubt sind. Die Anschlüsse 27 bis 33 können grundsätzlich auch einstückig mit dem Gehäuse 2 gebildet sein. Die Anschlüsse 27 bis 33 besitzen parallele Längs- oder Anschlussachsen und sind in einer gemeinsame Ebene angeordnet. Ein Anschließen kann von zwei gegenüberliegenden Seiten her erfolgen.

Das Liftachsventil 25 ist mit drei Befestigungsmitteln 5, 6, 34 versehen, nämlich einem verschraubbaren Befestigungsmittel 5, einem formschlüssigen Befestigungsmittel 6 und einem weiteren Befestigungsmittel 34, welches mit einer Anlagefläche 35 zur Anlage an eine hier nicht dargestellte Konsole gebildet ist. Die Befestigungsmittel 5, 6, 34 sind hierbei senkrecht zu den Längsrichtungen der Anschlüsse 27 bis 33 ausgerichtet, sodass die Befestigung von einer Seite her und das Anschließen von zwei Seiten quer dazu erfolgen kann.

Das verschraubbare Befestigungsmittel 5 ist hier ähnlich wie in Fig. 2 mit einem Stehbolzen 44 gebildet, der in eine Ausnehmung 40 eines Vorsprungs 41 des Gehäuses 2 eingeschraubt ist.

Der Vorsprung 41 ist hierbei hülsenartig ausgebildet mit einem im Wesentlichen kreisringförmigen Querschnitt. An dem sich von der Längsachse 26 weg erstreckenden Ende des Vorsprungs 41 weist dieser eine kreisringförmige Anlagefläche 36 auf, die wie die Anlagefläche 13 gemäß Fig. 1 bei der Befestigung des Gehäuses 2 zur Anlage an die Konsole kommen kann. Zur Befestigung kann ähnlich wie in Fig. 2 eine Mutter (hier nicht dargestellt) auf ein Außengewinde 48 des Stehbolzens 44 geschraubt werden.

Das formschlüssige Befestigungsmittel 6 ist parallel zu dem verschraubbaren Befestigungsmittel 5 ausgerichtet, wobei das formschlüssige Befestigungsmittel 6 an dem Gehäuse 2 in dem Abstand 7 gegenüber dem verschraubbaren Befestigungsmittel 5 versetzt angeordnet ist. Das formschlüssige Befestigungsmittel 6 ist als ein Haltestift 39 ausgebildet, der einstückig, hier durch stoffschlüssige Verbindung, mit dem Gehäuse 2 gebildet ist. Der Haltestift 39 weist zwei gegenüberliegende, sich radial von der Stiftachse weg erstreckende Ansätze oder Vorsprünge 49, 50 auf. Längs der Stiftachse erstrecken sich die Vorsprünge 49, 50 aber nur bis zu einem Teil der Länge des Haltestifts 39, sodass durch ihre sich von dem Gehäuse 2 weg erstreckenden Endflächen eine Anlagefläche 42 gebildet ist. Die derart gebildete Anlagefläche 42 kann wie die Anlagefläche 19 gemäß Fig. 1 oder Fig. 2 bei der Befestigung des Gehäuses 2 zur Anlage an die Konsole kommen. Somit kann über die Anlagefläche 42 eine Abstützung des Gehäuses 2 des Liftachsventils 25 erfolgen.

Das weitere Befestigungsmittel 34 ist als ein Absatz 43 mit kreisringförmigem Querschnitt gebildet, wobei die Anlagefläche 35 durch die sich von der Längsachse 26 weg erstreckende Endfläche des Absatzes 43 gebildet ist. Das weitere Befestigungsmittel 34 ist relativ zu den Befestigungsmitteln 5, 6 versetzt angeordnet und zwar in Abständen 37, 38 von diesen. Die Anlagefläche 35 verläuft dabei senkrecht zu der Schraubachse 10 und der Stiftachse 21 der Befestigungsmittel 5, 6. Beim Befestigen des Liftachsventils 25 an einer hier nicht dargestellten Konsole kommt die Anlagefläche 35 des weiteren Befestigungsmittels 34 zur Anlage an die Konsole. Dadurch kann eine besonders stabile Halterung des Liftachsventils 25 an der Konsole erfolgen. Gemäß der hier dargestellten Ausführungsform stützt sich das Gehäuse 2 des Liftachsventils 25 im montierten Zustand über die Anlageflächen 25, 36 und 42 der Befestigungsmittel 5, 6 und 34 an der Konsole ab. Dazu sind die Anlageflächen 36, 42 und 35 in einer Ebene parallel zu der Längsachse 26 angeordnet. Es sind aber durchaus auch andere Ausgestaltungen möglich, bei denen die Anlageflächen 36, 42 und 35 nicht in einer Ebene liegen.

Über die Konsole kann das Liftachsventil 25 an einem Nutzfahrzeug gehalten werden. Vorzugsweise befindet sich solch eine Konsole ungefähr mittig zwischen Achsen des Nutzfahrzeugs. Vorzugsweise ist die Konsole derart angeordnet und an dem Nutzfahrzeug befestigt, dass sich das Liftachsventil 25 ungefähr in Fahrzeuglängsrichtung in Höhe der EBS-Steuereinheit befindet. Als Konsole kann hierbei ein einfaches Halteblech zum Einsatz kommen, das mit entsprechenden Ausnehmungen oder Bohrungen für das verschraubbare Befestigungsmittel 5 und das formschlüssige Befestigungsmittel 6 vorgesehen ist. Eine Montage des erfindungsgemäßen Ventils 1, wie des in Fig. 4 dargestellten Liftachsventils 25, kann hierbei erfolgen, indem der Haltestift 39 des formschlüssigen Befestigungsmittels 6 sowie der Stehbolzen 44 des verschraubbaren Befestigungsmittels 5 durch die dafür vorgesehenen Ausnehmungen oder Bohrungen gesteckt werden, bis die Anlageflächen 36, 42 und 35 der Befestigungsmittel 5, 6 und 34 zur Anlage an die Konsole kommen. Durch das Verschrauben des verschraubbaren Befestigungsmittels 5 wird damit eine Abstützung des das Liftachsventil 25 über die drei Anlageflächen 36, 42 und 35 erreicht, sodass das Liftachsventil 25 sicher an der Konsole befestigt ist.

Die Erfindung wurde unter Bezugnahme auf die Ausbildung des Ventils als Liftachsventil oder als Hebe-Senk-Ventil beschrieben, ohne dass der genaue Aufbau dieser Ventile im Detail erläutert wurde. Entsprechende Erläuterungen zu Druckluftanlagen, Liftachsventilen und Hebe-Senk-Ventilen finden sich u. a. in den Druckschriften EP 0 830 958 A1, DE 10 2004 050 194 B3, DE 41 20 824 C1, DE 10 2010 003 463 A1, DE 42 02 729 C2 und DE 101 29 143 C1.

### BEZUGSZEICHENLISTE

- 1: Ventil
- 2: Gehäuse
- 3: Befestigungsvorrichtung
- 4: Konsole
- 5: Befestigungsmittel
- 6: Befestigungsmittel
- 7: Abstand
- 8: Ausnehmung
- 9: Befestigungsbolzen
- 10: Schraubachse
- 11: Kopf
- 12: Ausnehmung
- 13: Anlagefläche
- 14: Vorsprung
- 15: Mutter
- 16: Endbereich
- 17: Haltestift
- 18: Ausnehmung
- 19: Anlagefläche
- 20: Vorsprung
- 21: Stiftachse
- 22: Ausnehmung
- 23: Erweiterung
- 24: Bund
- 25: Liftachsventil
- 26: Längsachse
- 27: Anschluss
- 28: Anschluss
- 29: Anschluss
- 30: Anschluss
- 31: Anschluss
- 32: Anschluss
- 33: Anschluss
- 34: Befestigungsmittel
- 35: Anlagefläche
- 36: Anlagefläche
- 37: Abstand
- 38: Abstand
- 39: Haltestift
- 40: Ausnehmung
- 41: Vorsprung
- 42: Anlagefläche
- 43: Absatz
- 44: Stehbolzen
- 45: Innengewinde
- 46: Absatz
- 47: Rotation
- 48: Außengewinde
- 49: Vorsprung
- 50: Vorsprung

## Patentansprüche

1. Liftachsventil (25), Hebe-Senk-Ventil oder Luftfederventil für eine Druckluftanlage eines Nutzfahrzeugs mit
a) einem Gehäuse (2) und
b) einer Befestigungsvorrichtung (3) zum Verschrauben des Gehäuses (2) mit einer Konsole (4), wobei
c) die Befestigungsvorrichtung (3) zumindest zwei voneinander beabstandete Befestigungsmittel (5, 6) zur Befestigung des Gehäuses (2) an der Konsole (4) besitzt,
**dadurch gekennzeichnet, dass**
d) ausschließlich ein verschraubbares Befestigungsmittel (5) vorhanden ist und
e) mindestens ein formschlüssiges Befestigungsmittel (6) vorhanden ist, über welches das Gehäuse (2) zumindest drehfest gegenüber einer Rotation (47) um eine Schraubachse (10) des verschraubbaren Befestigungsmittels (5) an der Konsole (4) abstützbar ist.

2. Liftachsventil (25), Hebe-Senk-Ventil oder Luftfederventil nach Anspruch 1, **dadurch gekennzeichnet, dass** mindestens ein Befestigungsmittel (5, 6) einstückig mit dem Gehäuse (2) des Liftachsventils (25), Hebe-Senk-Ventils oder Luftfederventils ausgebildet ist.

3. Liftachsventil (25), Hebe-Senk-Ventil oder Luftfederventil nach Anspruch 2, **dadurch gekennzeichnet, dass** das formschlüssige Befestigungsmittel (6) einstückig mit dem Gehäuse (2) des Liftachsventils (25), Hebe-Senk-Ventils oder Luftfederventils gebildet ist.

4. Liftachsventil (25), Hebe-Senk-Ventil oder Luftfederventil nach Anspruch 1 oder 2, **dadurch gekennzeichnet, dass** das formschlüssige Befestigungsmittel (6) separat von dem Gehäuse (2) ausgebildet und in einer Ausnehmung (40) des Gehäuses (2) des Liftachsventils (25), Hebe-Senk-Ventils oder Luftfederventils gehalten ist.

5. Liftachsventil (25), Hebe-Senk-Ventil oder Luftfederventil nach einem der Ansprüche 1 bis 3, **dadurch gekennzeichnet, dass** das formschlüssige Befestigungsmittel (6) als ein Vorsprung des Gehäuses (2) oder eine Vertiefung in dem Gehäuse (2) zum Aufnehmen eines entsprechenden Vorsprungs der Konsole (4) ausgebildet ist.

6. Liftachsventil (25), Hebe-Senk-Ventil oder Luftfederventil nach Anspruch 3 oder 4, **dadurch gekennzeichnet, dass** das formschlüssige Befestigungsmittel (6) ein Haltestift (17, 39) ist.

7. Liftachsventil (25), Hebe-Senk-Ventil oder Luftfederventil nach einem der vorhergehenden Ansprüche, **dadurch gekennzeichnet, dass** das verschraubbare Befestigungsmittel (5) einen Stehbolzen (44) aufweist, der in ein Innengewinde (45) des Gehäuses (2) geschraubt ist.

8. Liftachsventil (25), Hebe-Senk-Ventil oder Luftfederventil nach einem der vorhergehenden Ansprüche, **dadurch gekennzeichnet, dass** das verschraubbare Befestigungsmittel (5) mit einer ein Innengewinde (45) aufweisenden Ausnehmung (22) des Gehäuses (2) gebildet ist.

9. Liftachsventil (25), Hebe-Senk-Ventil oder Luftfederventil nach einem der Ansprüche 1 bis 7, **dadurch gekennzeichnet, dass** das verschraubbare Befestigungsmittel (5) mit einer von dem Gehäuse (2) gehaltenen Hülse (24) gebildet ist, die das Innengewinde (45) aufweist.

10. Liftachsventil (25), Hebe-Senk-Ventil oder Luftfederventil nach einem der vorhergehenden Ansprüche, **dadurch gekennzeichnet, dass** das verschraubbare Befestigungsmittel (5) mit einer durchgängigen Ausnehmung (12) gebildet ist, durch die sich ein Befestigungsbolzen (9) erstrecken kann.

11. Liftachsventil (25), Hebe-Senk-Ventil oder Luftfederventil nach einem der vorhergehenden Ansprüche, **dadurch gekennzeichnet, dass** die Befestigungsvorrichtung (3) ein weiteres Befestigungsmittel (34) mit einer Anlagefläche (35) zur Anlage an die Konsole (4) aufweist.

12. Liftachsventil (25), Hebe-Senk-Ventil oder Luftfederventil nach Anspruch 11, **dadurch gekennzeichnet, dass** die Anlagefläche (35) eine Flächennormale besitzt, welche parallel zur Schraubachse (10) orientiert ist.

13. Liftachsventil (25), Hebe-Senk-Ventil oder Luftfederventil nach Anspruch 11 oder 12, **dadurch gekennzeichnet, dass** die Anlagefläche (35) von dem Gehäuse (2) ausgebildet ist.

14. Liftachsventil (25), Hebe-Senk-Ventil oder Luftfederventil nach einem der vorhergehenden Ansprüche, **dadurch gekennzeichnet, dass** das Liftachsventil (25), Hebe-Senk-Ventil oder Luftfederventil mindestens zwei alternative Befestigungsvorrichtungen (3) aufweist, wobei die mindestens zwei alternativen Befestigungsvorrichtungen (3) in Umfangsrichtung des Gehäuses (2) versetzt angeordnet sind.

15. Liftachsventil (25), Hebe-Senk-Ventil oder Luftfederventil nach einem der vorhergehenden Ansprüche, **dadurch gekennzeichnet, dass** das formschlüssige Befestigungsmittel (6) parallel zu der Schraubachse (10) des verschraubbaren Befestigungsmittels (5) orientiert ist.

16. Liftachsventil (25), Hebe-Senk-Ventil oder Luftfederventil nach einem der vorhergehenden Ansprüche, **dadurch gekennzeichnet, dass** die Befestigungsvorrichtung (3) zumindest teilweise aus einem Kunststoff hergestellt ist.

## Claims

1. Lift axle valve (25), lift-lowering-valve or air-spring valve for a compressed air system of a commercial vehicle with
a) a housing (2) and
b) a mounting device (3) for screwing the housing (2) to a bracket (4),
c) the mounting device (3) has at least two mounting means (5, 6) being located with a distance from each other and used for mounting the housing (2) to the console or bracket (4),
**characterised in that**
d) there is only one single screwable mounting means (5) and
e) there is at least one positively-engaging mounting means (6) by which the housing (2) is supported at the console or bracket (4) at least fixed against rotation with respect to a rotation (47) about a screw axis (10) of the screwable mounting means (5).

2. Lift axle valve (25), lift-lowering-valve or air-spring valve of claim 1, **characterised in that** at least one mounting means (5, 6) is formed one-piece with the housing (2) of the lift axle valve (25), lift-lowering-valve or air-spring valve.

3. Lift-axle valve (25), lift-lowering-valve or air-spring valve of claim 2, **characterised in that** at least one mounting means (5, 6) is formed as one piece with or integrally by the housing (2) of the lift-axle valve (25), lift-lowering-valve or air-spring valve.

4. Lift axle valve (25), lift-lowering-valve or air-spring valve of claim 1 or 2, **characterised in that** the positively-engaging mounting means (6) is formed separately from the housing (2) and held in a recess (40) of the housing (2) of the lift axle valve (25), lift-lowering-valve or air-spring valve.

5. Lift axle valve (25), lift-lowering-valve or air-spring valve of one of claims 1 to 3, **characterised in that** the positively-engaging mounting means (6) is formed by a protrusion of the housing (2) or a recess in the housing (2) for accommodating a corresponding protrusion of the console or bracket (4).

6. Lift-axle valve (25), lift-lowering valve or air-spring valve of claim 3 or 4, **characterised in that** the positively-engaging mounting means (6) is a holding bolt or holding pin (17, 39).

7. Lift axle valve (25), lift-lowering-valve or air-spring valve of one of the preceding claims, **characterised in that** the screwable mounting means (5) comprises a stud bolt (44) which is screwed into an inner thread (45) of the housing (2).

8. Lift axle valve (25), lift-lowering-valve or air-spring valve of one of the preceding claims, **characterised in that** the screwable mounting means (5) is formed with a recess (22) of the housing (2) comprising an inner thread (45).

9. Lift axle valve (25), lift-lowering-valve or air-spring valve of one of claims 1 to 7, **characterised in that** the screwable mounting means (5) is formed by a sleeve (24) held by the housing (2), the sleeve (24) comprising the inner thread (45).

10. Lift axle valve (25), lift-lowering-valve or air-spring valve of one of the preceding claims, **characterised in that** the screwable mounting means (5) is formed by a through recess (12) through which the mounting bolt (9) can extend.

11. Lift axle valve (25), lift-lowering-valve or air-spring valve of one of the preceding claims, **characterised in that** the mounting device (3) comprises another mounting means (34) with a contact surface (35) for a contact with the console or bracket (4).

12. Lift axle valve (25), lift-lowering-valve or air-spring valve of claim 11, **characterised in that** the contact surface (35) comprises a surface normal having an orientation parallel to the screw axis (10).

13. Lift axle valve (25), lift-lowering-valve or air-spring valve of claim 11 or 12, **characterised in that** the contact surface (35) is formed by the housing (2).

14. Lift axle valve (25), lift-lowering-valve or air-spring valve of one of the preceding claims, **characterised in that** the lift axle valve (25), lift-lowering-valve or air-spring valve comprises at least two alternative mounting devices (3), the at least two alternative mounting devices (3) being arranged with an offset in circumferential direction of the housing (2).

15. Lift-axle valve (25), lift-lowering-valve or air-spring valve of one of the preceding claims, **characterised in that** the positively-engaging mounting means (6) has an orientation parallel to the screw axis (10) of the screwable mounting means (5).

16. Lift axle valve (25), lift-lowering-valve or air-spring valve of one of the preceding claims, **characterised in that** the mounting device (3) is at least partially manufactured from a plastic material.

## Revendications

1. Soupape d'essieu relevable (25), soupape de levage-abaissement ou soupape d'amortissement à air pour une installation d'air comprimé d'un véhicule utilitaire avec
a) un boîtier (2) et
b) un dispositif de fixation (3) pour le vissage du boîtier (2) à une console (4),
c) le dispositif de fixation (3) comprenant au moins deux moyens de fixation (5, 6) distants entre eux pour la fixation du boîtier (2) à la console (4), **caractérisée en ce que**
d) seul un moyen de fixation vissable (5) est présent et
e) au moins un moyen de fixation à complémentarité de forme (6) est prévu, par l'intermédiaire duquel le boîtier (2) peut être appuyé, de manière au moins solidaire en rotation par rapport à rotation (47) autour d'un axe de vis (10) du moyen de fixation vissable (5) contre la console (4).

2. Soupape d'essieu relevable (25), soupape de levage-abaissement ou soupape d'amortissement à air selon la revendication 1, **caractérisée en ce qu'**au moins un moyen de fixation (5, 6) est conçu d'une seule pièce avec le boîtier (2) de la soupape d'essieu relevable (25), soupape de levage-abaissement ou soupape d'amortissement à air.

3. Soupape d'essieu relevable (25), soupape de levage-abaissement ou soupape d'amortissement à air selon la revendication 2, **caractérisée en ce que** le moyen de fixation par complémentarité de forme (6) est conçu d'une seule pièce avec le boîtier (2) de la soupape d'essieu relevable (25), soupape de levage-abaissement ou soupape d'amortissement à air.

4. Soupape d'essieu relevable (25), soupape de levage-abaissement ou soupape d'amortissement à air selon la revendication 1 ou 2, **caractérisée en ce que** le moyen de fixation par complémentarité de forme (6) est conçu séparément du boîtier (2) et est maintenu dans un évidement (40) du boîtier (2) de la soupape d'essieu relevable (25), soupape de levage-abaissement ou soupape d'amortissement à air.

5. Soupape d'essieu relevable (25), soupape de levage-abaissement ou soupape d'amortissement à air selon l'une des revendications 1 à 3, **caractérisée en ce que** le moyen de fixation par complémentarité de forme (6) est conçu comme une saillie du boîtier (2) ou un creux dans le boîtier (2) pour le logement d'une saillie correspondante de la console (4).

6. Soupape d'essieu relevable (25), soupape de levage-abaissement ou soupape d'amortissement à air selon la revendication 3 ou 4, **caractérisée en ce que** le moyen de fixation par complémentarité de forme (6) est une goupille de maintien (17, 39).

7. Soupape d'essieu relevable (25), soupape de levage-abaissement ou soupape d'amortissement à air selon l'une des revendications précédentes, **caractérisée en ce que** le moyen de fixation vissable (5) comprend un boulon vertical (44) qui est vissé dans un filetage interne (45) du boîtier (2).

8. Soupape d'essieu relevable (25), soupape de levage-abaissement ou soupape d'amortissement à air selon l'une des revendications précédentes, **caractérisée en ce que** le moyen de fixation vissable (5) est conçu avec un évidement (22) du boîtier (2) comprenant un filetage interne (45).

9. Soupape d'essieu relevable (25), soupape de levage-abaissement ou soupape d'amortissement à air selon l'une des revendications 1 à 7, **caractérisée en ce que** le moyen de fixation vissable (5) est conçu avec un manchon (24), maintenu par le boîtier (2), qui comprend le filetage interne (45).

10. Soupape d'essieu relevable (25), soupape de levage-abaissement ou soupape d'amortissement à air selon l'une des revendications précédentes, **caractérisée en ce que** le moyen de fixation vissable (5) est conçu avec un évidement traversant (12) à travers lequel un boulon de fixation (9) peut s'étendre.

11. Soupape d'essieu relevable (25), soupape de levage-abaissement ou soupape d'amortissement à air selon l'une des revendications précédentes, **caractérisée en ce que** le dispositif de fixation (3) comprend un autre moyen de fixation (34) avec une surface d'appui (35) pour un appui contre la console (4).

12. Soupape d'essieu relevable (25), soupape de levage-abaissement ou soupape d'amortissement à air selon la revendication 11, **caractérisée en ce que** la surface d'appui (35) comprend une normale à la surface qui est orientée parallèlement à l'axe de vissage (10).

13. Soupape d'essieu relevable (25), soupape de levage-abaissement ou soupape d'amortissement à air selon la revendication 11 ou 12, **caractérisée en ce que** la surface d'appui (35) est réalisée à partir du boîtier (2).

14. Soupape d'essieu relevable (25), soupape de levage-abaissement ou soupape d'amortissement à air selon l'une des revendications précédentes, **caractérisée en ce que** la soupape d'essieu relevable (25), soupape de levage-abaissement ou soupape d'amortissement à air comprend au moins deux dispositifs de fixation alternatifs (3), les au moins deux dispositifs de fixation alternatifs (3) étant disposés de manière décalée dans la direction de la circonférence du boîtier (2).

15. Soupape d'essieu relevable (25), soupape de levage-abaissement ou soupape d'amortissement à air selon l'une des revendications précédentes, **caractérisée en ce que** le moyen de fixation par complémentarité de forme (6) est orienté parallèlement à l'axe de vissage (10) du moyen de fixation vissable (5).

16. Soupape d'essieu relevable (25), soupape de levage-abaissement ou soupape d'amortissement à air selon l'une des revendications précédentes, **caractérisée en ce que** le dispositif de fixation (3) est constitué au moins partiellement d'une matière plastique.
